Europäisches Patentamt

European Patent Office

Office européen des brevets

(19)

(11) Publication number: **0 523 237 A1**

## (12) EUROPEAN PATENT APPLICATION
### published in accordance with Art. 158(3) EPC

(21) Application number: **92900898.5**

(22) Date of filing: **04.12.91**

(86) International application number:
**PCT/JP91/01687**

(87) International publication number:
**WO 92/14295 (20.08.92 92/22)**

(51) Int. Cl.⁵: **H02N 2/00**

(30) Priority: **05.02.91 JP 14406/91**

(43) Date of publication of application:
**20.01.93 Bulletin 93/03**

(84) Designated Contracting States:
**DE GB NL**

(71) Applicant: **SEIKO EPSON CORPORATION**
**4-1, Nishishinjuku 2-chome**
**Shinjuku-ku Tokyo 163(JP)**

(72) Inventor: **MIYAZAWA, Osamu 3-5, Owa**
**3-chome**
**Suwa-shi**
**Nagano-ken 392(JP)**

(74) Representative: **Sturt, Clifford Mark et al**
**J. MILLER & CO. 34 Bedford Row Holborn**
**London WC1R 4JH(GB)**

(54) **INDICATOR.**

(57) An indicator for indicating a physical value by moving an indicating member frictionally contacting a flexure-vibrating panel in the planar direction in accordance with planar-directional vibrational displacement of the panel.

Fig. 1

## Technical Field

The present invention relates to an indicating device wherein an indicating member which is in frictional contact with a panel is driven by ultrasonic vibration to move in the plane direction, thereby indicating a physical quantity by the position of the indicating member.

## Background Art

Conventional indicating devices employ an electromagnet or a coil to rotate an indicating member by utilization of electromagnetic force to thereby indicate a physical quantity. According to one form of the prior art, the indicating member moves only when an electric current is supplied, and it returns by virtue of the resilient restoring force when the supply of the current is cut off. According to another form of the prior art, the indicating member is moved according to need by employing a stepping motor. Each prior art has its own advantageous features. However, since electromagnetic force is employed in either case, the conventional indicating devices cannot be used in a magnetic field. In addition, it is extremely difficult to reduce the size, particularly the thickness of the actuator section that comprises a magnet or a coil and a supporting member therefor because it is necessary to ensure a certain degree of strength and indication accuracy.

Under these circumstances, it is an object of the present invention to provide an indicating device wherein an indicating member is driven directly on a panel to thereby realize a reduction in the thickness, and a piezoelectric element is employed as an excitation source to enable accurate indication even in a magnetic field.

## Disclosure of the Invention

According to the indicating device of the present invention, an indicating member is driven directly by a panel that vibrates, so that there is no change in the indicating position even if the excitation is stopped. In addition, the indicating member can be moved either stepwisely or continuously, and it is also possible to combine the stepwise and continuous motions of the indicating member. Further, since a piezoelectric element is used as a vibrator, the indicating device can indicate a physical quantity without being affected by a magnetic field and without affecting the surroundings. From the viewpoint of the structure, since the indicating member is directly driven by the panel itself, the structure is simplified, and it is possible to reduce the size and thickness of the device with ease and also lower the cost.

## Brief Description of the Drawings

Figs. 1 and 2 are block diagrams showing schematically embodiments of the indicating device according to the present invention.

Figs. 3, 4 and 5 show one example of an arrangement for shifting the node position of a vibration mode of 2λ

Fig. 6 is a timing chart showing exemplarily driving waveforms.

Fig. 7 is a block diagram of another embodiment of the present invention.

Fig. 8 is a view for explanation of one example of a method of exciting a progressive wave.

Fig. 9 is a view for explanation of one example of a method of exciting a standing wave.

Fig. 10 is a timing chart showing exemplarily signal waveforms at various portions in the block diagram shown in Fig. 7.

Fig. 11 is a view for explanation of an example of another method of exciting a standing wave.

Fig. 12 is a sectional view showing a first constructional example of the indicating device according to the present invention.

Fig. 13 is a top plan view of the arrangement shown in Fig. 12.

Fig. 14 is a sectional view showing a second constructional example of the indicating device according to the present invention.

Fig. 15 is a top plan view showing an example of wiring patterns in the arrangement shown in Figs. 12 and 13.

Fig. 16 is a top plan view showing a third embodiment of the indicating device according to the present invention.

Fig. 17 is a view for explanation of another vibration mode.

Fig. 18 is a sectional view showing the third embodiment of the indicating device according to the present invention.

Fig. 19 is a sectional view showing a fourth embodiment of the indicating device according to the present invention.

Fig. 20 is a plan view of a circuit board in the arrangement shown in Fig. 19.

Fig. 21 is a sectional view showing a fifth embodiment of the indicating device according to the present invention.

Fig. 22 is a top plan view showing a sixth embodiment of the indicating device according to the present invention.

## Best Mode for Carrying Out the Invention

The present invention will be described below in detail with reference to the accompanying drawings.

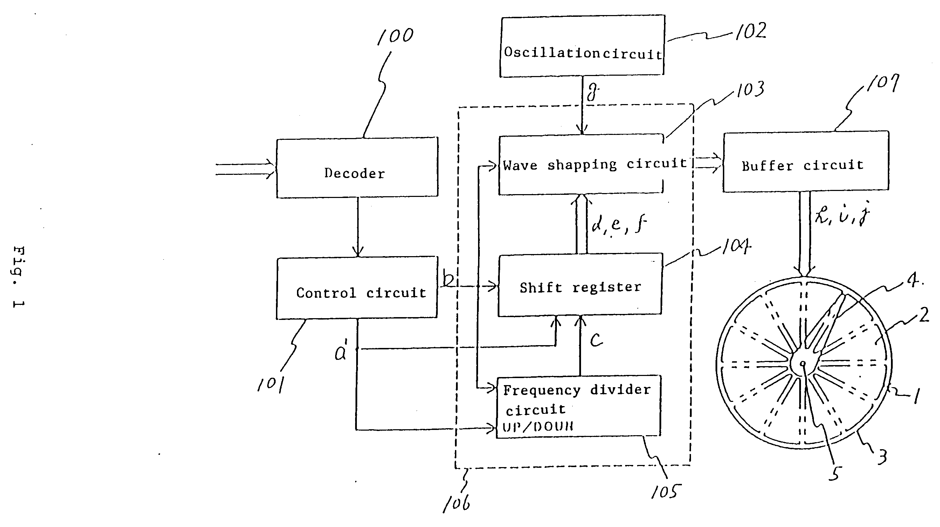

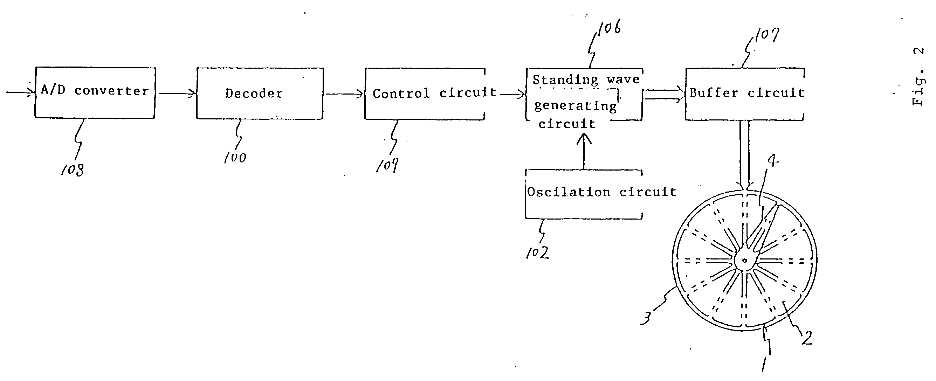

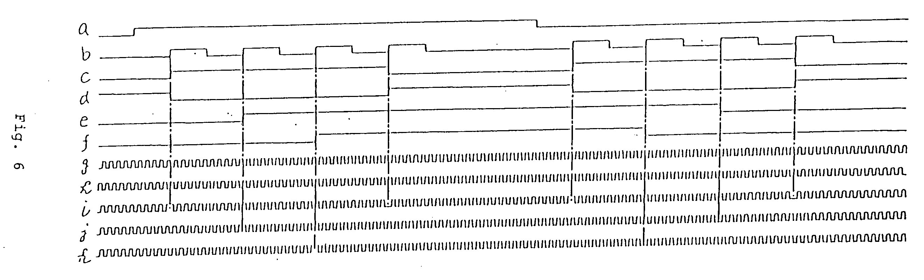

Figs. 1 and 2 are block diagrams showing schematically embodiments of the indicating device according to the present invention, and Fig. 6 is a timing chart showing exemplarily driving waveforms. Reference numeral 100 denotes a decoder that converts a coded physical quantity into a driving quantity for the indicating device according to the present invention, and 101 a control circuit that controls the operations of various sections according to the driving quantity. A vibrator 1 that comprises a piezoelectric element, for example, is attached to a panel 3 serving as a vibrating member. In this embodiment, the vibrator 1 is formed from 12 divided vibrating elements. An indicating member 4 which is in frictional contact with the panel 3 rotates about a pin 5. If flexural vibration of, for example, 2λ (λ: the length of one period of the vibration mode), is excited, the indicating member 3 moves to the position of a node of the vibration where it is stabilized. If the node position is shifted, the indicating member 4 also moves in accordance with the shift. More specifically, if the vibrating elements 2 are divided into groups of three and each pair of adjacent groups are driven in anti-phase with each other, a standing wave of 2λ can be excited, and if the vibrator 1 is driven with one vibrating element in each group shifted to the neighboring group, the node position can be shifted by an amount corresponding to one vibrating element. In this embodiment, therefore, indication can be effected in 12 steps. It should be noted that such a driving principle is described in detail in Japanese Patent Application No. 01-273082 proposed by the present applicant. According to this driving principle, it is only necessary to form a standing wave and move the node position thereof. Therefore, the kind of standing wave, the excitation method and the method of moving the node position are not limited to those in the above-described example. The arrangement will further be explained in detail. The control circuit 101 delivers a step signal b for controlling the number of steps of movement of the indicating member 4 and an up/down signal a for changing over the forward and backward directions of the movement, thus causing a frequency divider circuit 105 and a shift register 104 to deliver a signal c and signals d, e and f, respectively. At this time, the frequency divider circuit 105 causes the panel 3 to vibrate at 2λ. In a case where indication is effected in 12 steps, the circuit 105 is arranged in the form of a 1/6 frequency divider circuit. An oscillation circuit 102 delivers a frequency waveform g in the vicinity of the resonance frequency of the panel 3 having the vibrator 1 attached thereto. The frequency waveform g is modulated by the signals d, e, and f, together with the inverted waveform h, and driving waveforms h, i and j are applied to the vibrator 1 through a buffer 107. The driving waveforms i, j and k are waveforms whose phase changes 180° synchronously with the step signal b. The driving waveforms i, j and k, together with their inverted waveforms (not shown), drive the above-described vibrating elements 2 to excite vibration while changing the node position of the standing wave of 2λ. It should be noted that the wave shaping circuit 103, the shift register 104 and the frequency divider circuit 105 form in combination a standing wave generating circuit 106 that generates signals for exciting a standing wave while changing the node position sequentially. In the embodiment shown in Fig. 2, an A/D converer 108 is inserted because the physical quantity is an analog voltage in this case.

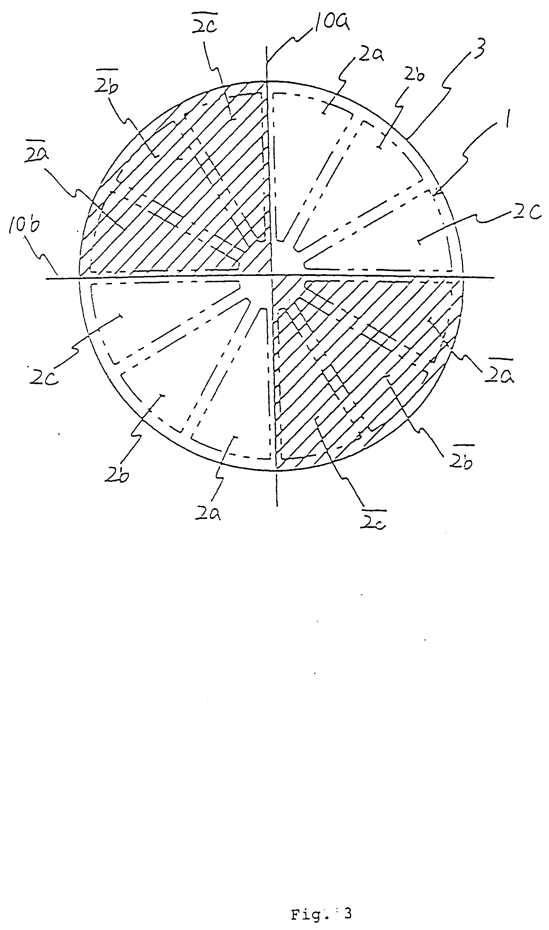

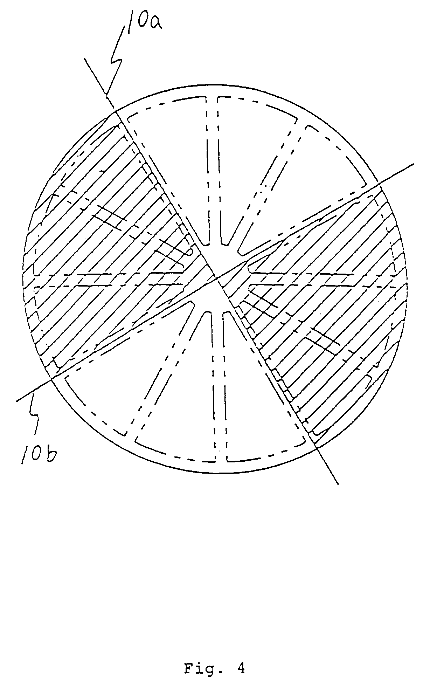

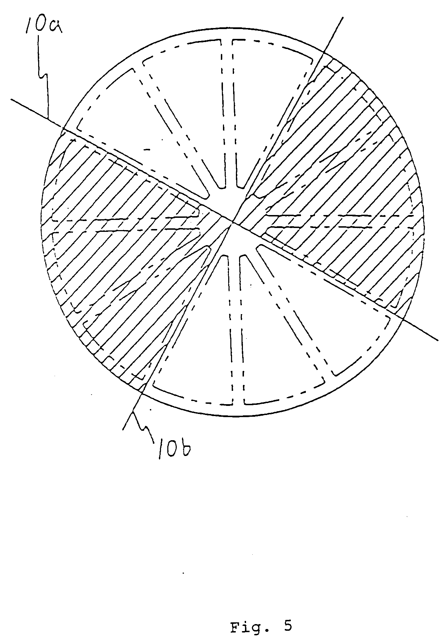

Referring to Figs. 3, 4 and 5, which are views for explanation of one example of an arrangement for shifting the node position of a vibration mode of 2λ, the vibrator 1 that is attached to the panel 3 has 12 vibrating elements comprising 6 pairs of vibrating elements 2a, 2b, 2c, $\overline{2a}$, $\overline{2b}$ and $\overline{2c}$. If the vibrating elements 2a, 2b and 2c are driven with the same voltage waveform, while the vibrating elements $\overline{2a}$, $\overline{2b}$ and $\overline{2c}$ are driven in anti-phase with the vibrating elements 2a, 2b and 2c, hatched and non-hatched portions vibrate in anti-phase with each other, so that vibration nodes are formed at positions 10 and 10b. More specifically, the waveforms i, j and h in Fig. 6 are applied to the vibrating elements 2a, 2b and 2c, respectively, and waveforms obtained by inverting these waveforms are applied to the vibrating elements $\overline{2a}$, $\overline{2b}$ and $\overline{2c}$, respectively. With this arrangement, the positions of the vibration nodes 10a and 10b shift to the positions shown in Figs. 3, 4 and 5 at the timing of the step signal b. If the above-described indicating member is present, it moves in accordance with the shift of the node position. It is not necessary to excite the vibrator 1 at all times, and if the drive is stopped after the desired indication has been made, the indicating member stays at the indicating position by virtue of frictional force.

In the above-described arrangement, if a temperature is input as a voltage value, for example, it is converted into a digital quantity by the A/D converter 108, and an amount of change of the digital quantity is detected by the decoder 100. In response to this, the control circuit 109 changes the position of formation of a standing wave in accordance with the amount of change of the indication, thereby moving the indicating member. Thus, it is possible to indicate a physical quantity.

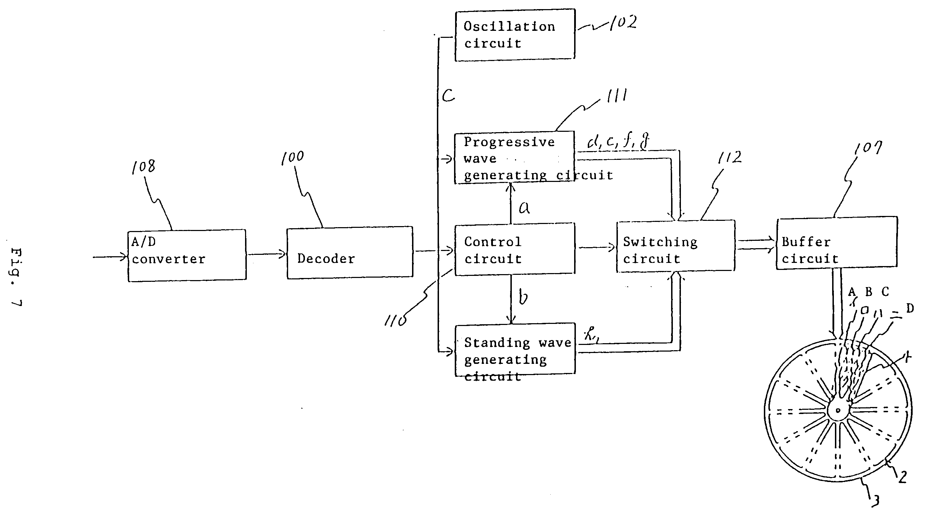

Fig. 7 is a block diagram showing another embodiment of the indicating device according to the present invention. Reference numeral 108 denotes an A/D converter that converts a voltage value into a digital signal, 100 a decoder that detects an amount of change of the digital signal, 102 an oscillation circuit that outputs a frequency in the vicinity of the resonance frequency of a panel 3 having a vibrator 2 attached thereto, 111 a progressive wave generating circuit that forms driving waveforms which are, for example, 90° out of phase with each other, 112 a standing wave generating circuit, and 112 a switching circuit that switches over signals delivered from the progressive wave generating circuit 111 and the standing wave generating circuit 106 to drive the vibrator 2 through a buffer circuit 107. A control circuit 110 controls the driving time and the number of times of driving of the progressive wave generating circuit 111 in response to the output signal from the decoder 100 and drives the standing wave generating circuit 106 occasionally and further controls the switching circuit 112. An indicating member 4 is in frictional contact with the panel 3.

Prior to the detailed description of the operation, methods of exciting a standing wave and a progressive wave will be explained.

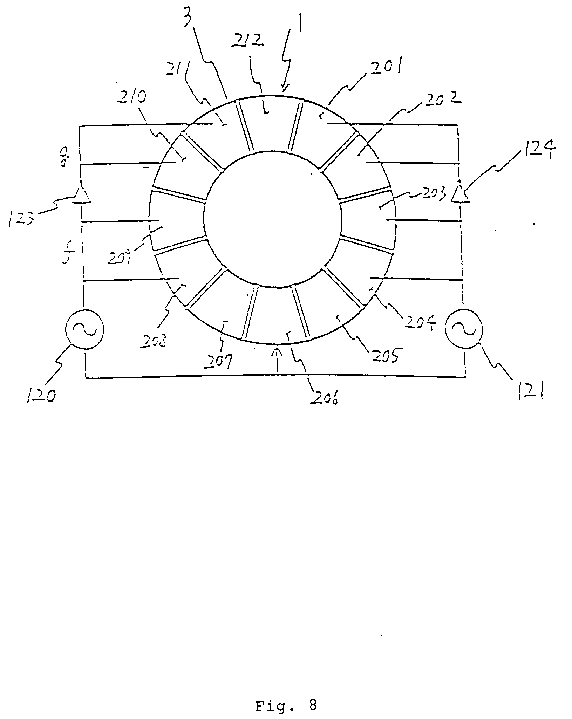

Referring to Fig. 8, which is a view for explanation of one example of a method of exciting a progressive wave, a vibrator 1 that is attached to a panel 3 comprises a piezoelectric element, for example, which is composed of 12 vibrating elements 201 to 212, for example. The vibrating elements can be driven individually. AC power supplies 120 and 121 are 90° out of phase with each other. Reference numerals 123 and 124 denote inverters. In this arrangement, a progressive wave of 3λ is formed, and an indicating member that is in frictional contact with the panel 3 rotates continuously. It should be noted that the method of exciting a progressive wave is detailed in Japanese Patent Laid-open (KOKAI) No. 59-96881.

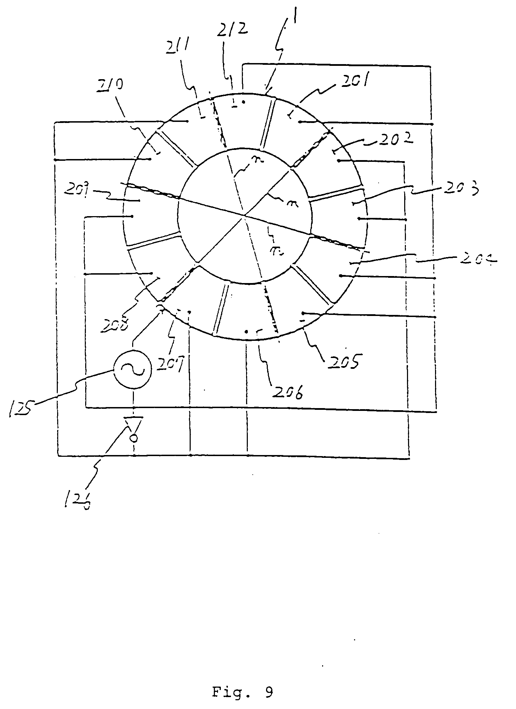

Fig. 9 is a view for explanation of one example of a method of exciting a standing wave, which differs from the example shown in Fig. 8 only in the method of driving the vibrator 1, which has the same arrangement as that shown in Fig. 8. Reference numeral 125 denotes an AC power supply, and 126 an inverter. Vibrating elements 212, 201, 204, 205, 208 and 209 are driven in phase with each other, while vibrating elements 202, 203, 206, 207, 210 and 211 are driven in anti-phase with the first group of vibrating elements. With this driving method, it is possible to excite a standing wave of 3λ which has nodes at the positions n.

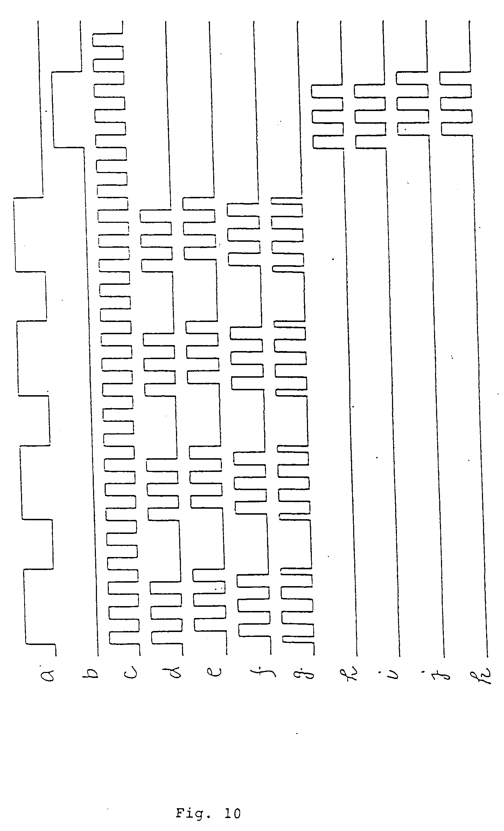

Fig. 10 is a timing chart showing exemplarily signal waveforms at various portions in the block diagram of Fig. 7 in a case where the progressive wave is generated 4 times intermittently and then the drive is switched over to that for a standing wave to effect positioning. In response to a step signal a and a positioning signal b delivered from the control circuit 110, driving waveforms d, e, f, g, h, i, j and k are applied to the vibrating elements shown in Figs. 8 and 9. Reference symbol c denotes an output signal from the oscillation circuit 102, and an intermittent waveform formed from the signal c. A waveform f is 90° out of phase with the waveform c. Waveforms e and g are formed by inverting the waveforms d and f, respectively. Waveforms j and k are formed by inverting waveforms h and i, respectively. With this arrangement, if the number of pulses of the driving waveforms d, e, f and g is properly selected, the indicating member 4 shown in Fig. 7 indicates each of the positions A, B, C, D and E in accordance with the waveforms of the step signal a and the positioning signal b.

It should be noted that in the above-described embodiment the indicating conditions (the number of steps, direction, etc.) of the indicating member are changed as desired by controlling the length of time and the number of times of excitation of the progressive wave, and a slight positional error produced in each condition is canceled by the standing wave excited occasionally. Accordingly, not only the vibration mode but also the excitation method, the timing, the number of steps, the configuration, the kind of vibrator, the way of polarization and the pattern arrangement are not limited to those in the embodiment.

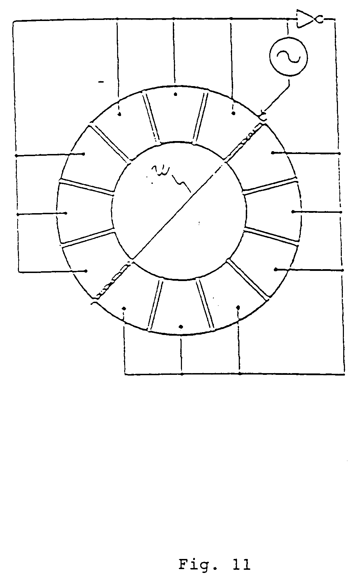

Fig. 11 is a view for explanation of an example of another method of exciting a standing wave, in which vibrating elements are divided into two groups and these two groups are driven in anti-phase with each other, whereby it is possible to excite a standing wave vibration mode of 1λ with a node n. Accordingly, if the progressive wave shown in Fig. 8 and the standing wave shown in Fig. 11 are combined, a cumulative error can be absorbed every 180°, and the indicating member can be moved to any desired position by the intermittent movement of the progressive wave progressing forwardly and backwardly during this period. As will be clear from the foregoing, the combination of progressive and standing waves is not limited to that described above, either.

A specific structure will be explained below.

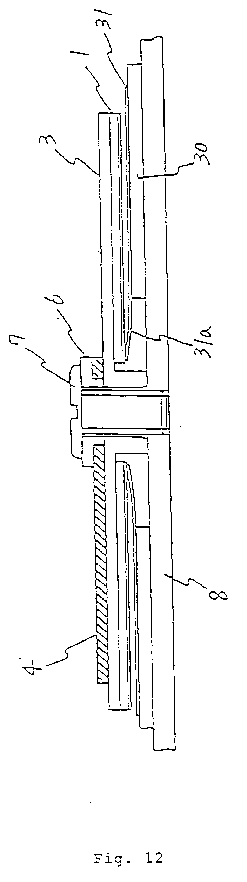

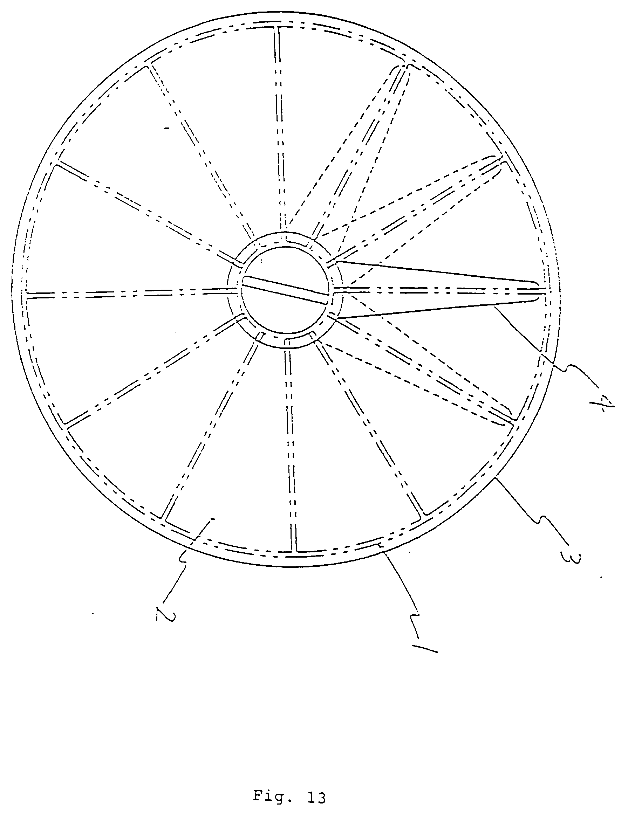

Fig. 12 is a sectional view showing a first constructional example of the indicating device according to the present invention, and Fig. 13 is a top plan view of it. An indicating member 4 is pressed against a base 8 through a collar 6 by a fixing screw 7, together with a panel 3 having a vibrator 2, comprising a piezoelectric element, attached thereto. The reverse surface of the vibrator 1 is provided with electrode patterns which are separated for respective vibrating elements. The electrode patterns are in contact with overhang portions 31a of wiring patterns 31 on a circuit board 30 to apply a voltage to each vibrating element. Although this embodiment has 12 divided electrode patterns (vibrating elements) as an example, it should be noted that the number of electrode patterns (vibrating elements) is not limited to that in the embodiment. It is also possible to move the indicating member 4 not only to the positions shown by the chain lines but also to any desired position by properly combining the above-described progressive waves. The method of bringing the indicating member 4 and the panel 3 into frictional contact with each other is not limited to the method described above. Electromagnetic attraction, electrostatic attraction, etc. may also be employed.

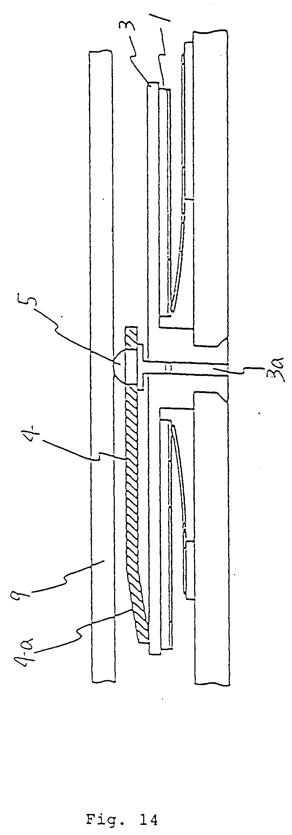

Fig. 14 is a sectional view showing a second constructional example of the indicating device according to the present invention. A panel 3 having a vibrator 1 attached thereof is provided with a guide hole 3a, and a pin 5 having an indicating member 4 attached thereto is rotatably engaged with the guide hole 3a. A cover 9 presses the pin 5 in such a manner as to cause frictional force to occur between the distal end portion 4a of the indicating member 4 and the panel 3. With this arrangement, the distal end portion 4a of the indicating member 4 is in contact with the outer peripheral portion of the panel 3 that has a large vibrational displacement and the indicating member 4 can be pressed through the pin 5 at the central portion thereof which has less rotational load, so that the indicating member 4 can be driven efficiently.

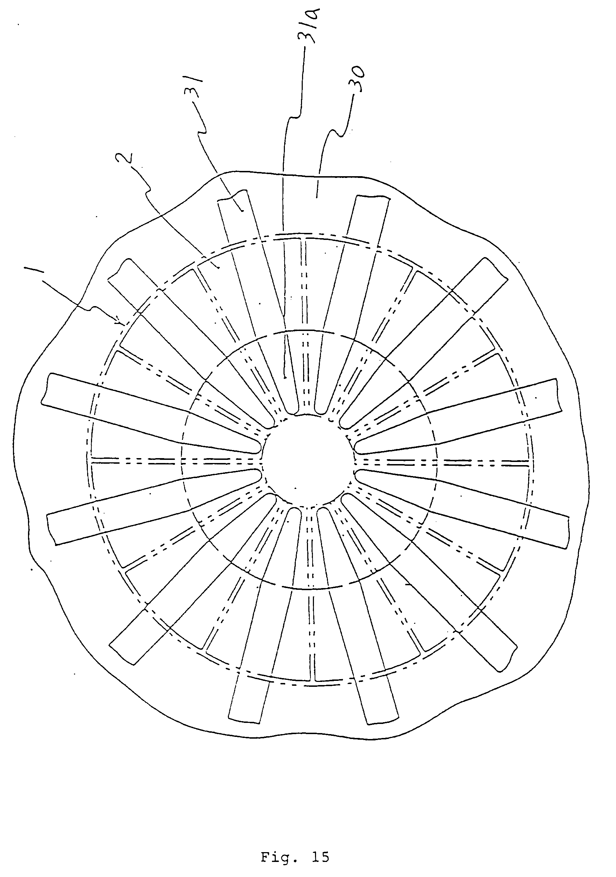

Fig. 15 is a top plan view showing an example of wiring patterns in the arrangement shown in Figs. 12 and 13. Wiring patterns 31 are provided on the circuit board 30 at respective positions which correspond to the electrode patterns 2 on the vibrator 1. Overhang portions 31a are in resilient contact with the respective electrode patterns 2 so as to be electrically connected thereto with or without employing an electrically conductive medium.

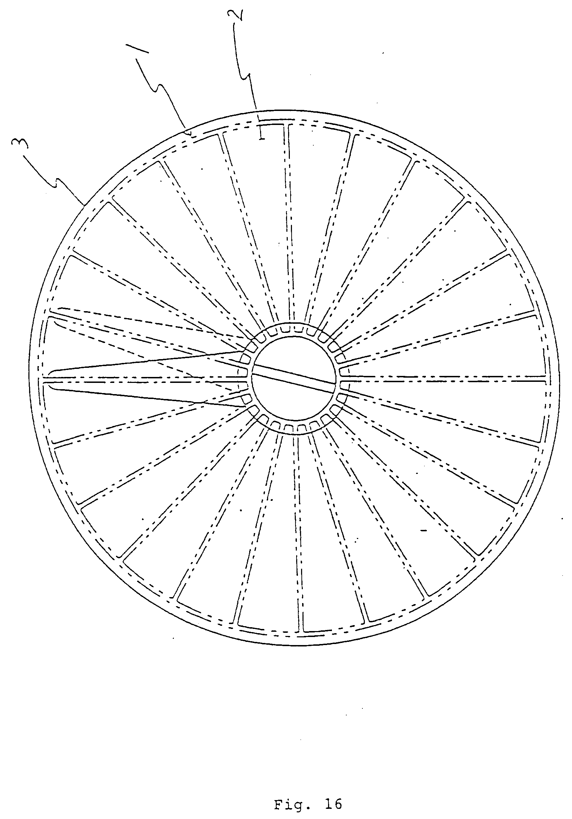

Fig. 16 is a top plan view showing a third embodiment of the indicating device according to the present invention, in which a vibrator 1 that is attached to a panel 3 is comprised of 24 divided vibrating elements 2, thereby enabling realization of indication in 24 steps.

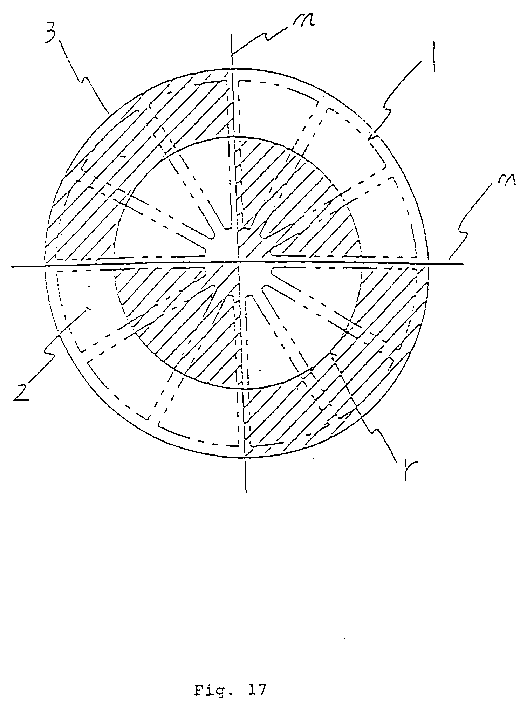

Fig. 17 is a view for explanation of another mode of vibration. A vibration mode having a nodal circle $\gamma$ and a nodal diameter n can be excited by properly setting the configuration and arrangement of vibrating elements 2 of the vibrator 1 and the driving frequency.

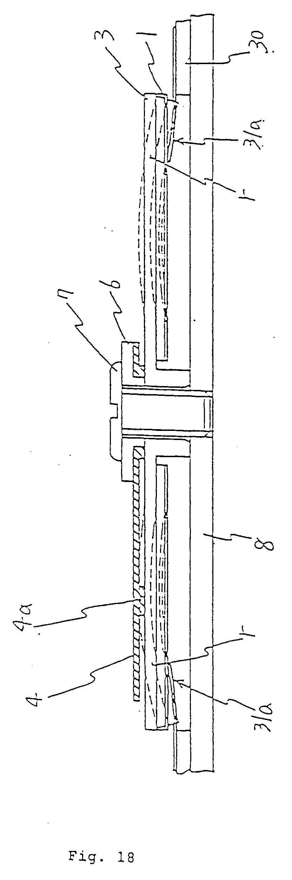

Fig. 18 is a sectional view showing the third embodiment of the indicating device according to the present invention, which has the vibration mode shown in Fig. 17 and which is deformable as shown exemplarily by the chain lines. The panel 3 having the vibrator 1 attached thereto is secured to a base 8 through a collar 6 by a fixing screw 7. wiring patterns 31a on a circuit board 30 attached to the base 8 are in contact with the corresponding electrode patterns on the vibrator 1 at the position of the nodal circle $\gamma$ of vibration. An indicating member 4 has a projection 4a which is pressed to come in frictional contact with the panel 3 at the antinode position of vibration by the resilient force from the indicating member 4 or magnetic attraction, electrostatic attraction, etc. With this arrangement, since the wiring patterns are electrically connected at the node position of vibration, the effect on the vibration is minimized. In addition, since the resonance frequency becomes high, even an indicating device that employs a large panel can be vibrated in the inaudible range.

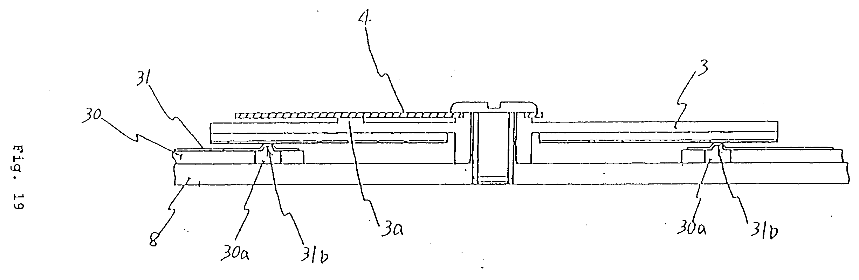

Fig. 19 is a sectional view showing a fourth embodiment of the indicating device according to the present invention, in which a projection 3a of a panel 3 having a vibrator 1, comprising a piezoelectric element, attached thereto and an indicating member 4 are in frictional contact with each other. A circuit board 30 which is attached to a base 8 is provided with holes 30a at which wiring patterns having projections 31b are disposed, respectively, so that the projections 31b are in contact with the corresponding electrode patterns on the vibrator 1 to provide electrical connection. With this arrangement, if the device is excited in the vibration mode shown in Fig. 17, the vibration component in the plane direction that drives the indicating member 4 is amplified by the projection 3a, so that the indicating member 4 can be driven efficiently. In addition, since the projections 31b are in contact with the electrode patterns at the position of the nodal circle, the effect on the vibration is minimized.

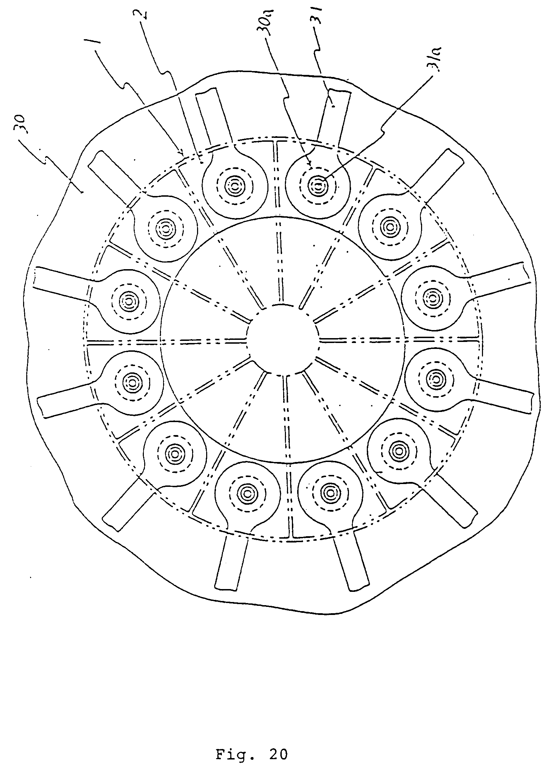

Fig. 20 is a plan view of the circuit board in the arrangement shown in Fig. 19. The projection 31a of the wiring patterns 31 are provided at the respective holes 30a provided in the circuit board 30 so as to be electrically connected to the respective electrode patterns 2 corresponding to the vibrating elements of the vibrator 1.

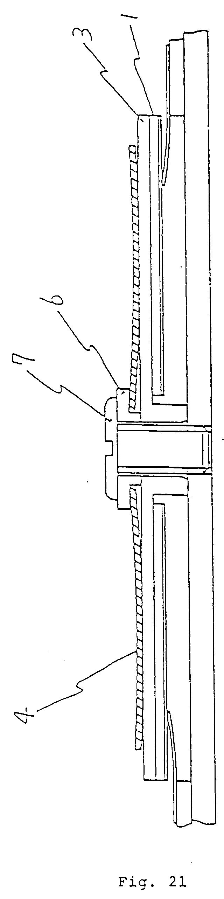

Fig. 21 is a sectional view showing a fifth embodiment of the indicating device according to the present invention, in which a panel 3 having a vibrator 1 attached thereto is secured by a fixing screw 7 through a collar 6. An indicating member 4 is elastically deformed by being pressed down by the collar 6 so as to be placed in frictional contact with the panel 3 by the repulsion force. With this arrangement, assembly can be completed simply by tightening the fixing screw, and since the indicating member is deflected, the gap and other dimensions require no high accuracy.

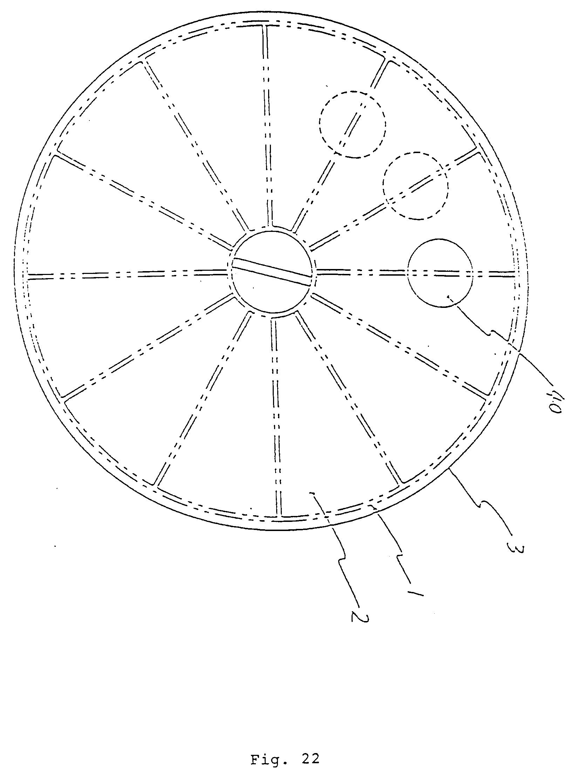

Fig. 22 is a top plan view showing a sixth embodiment of the indicating device according to the present invention, in which a panel 3 having a vibrator 1 with a plurality of electrode patterns 2 attached thereto is driven in a vibration mode having a nodal diameter and a nodal circle. In this case, an indicating object 40 moves on the intersection of the nodal circle and the nodal diameter. For example, if the indicating object 40 is moved sequentially in 12 steps per round while the vibration mode shown in Fig. 17 is being excited, the indicating object 40 moves sequentially as shown by the chain lines. It is a matter of course that, if the progressive and standing waves are switched over and the excitation is interrupted as has been detailed in connection with Fig. 7, the indicating object 40 can be driven in an increased number of steps, and if the progressive wave alone is excited, the indicating object 40 can be driven continuously.

Industrial Applicability

As has been described above, the indicating device of the present invention is arranged such that an indicating member or object is driven frictionally by a vibrating panel to indicate a physical quantity by the position of the indicating member or object. Accordingly, the configurations and arrangements of the panel, the indicating member, etc., the kind of vibrator, the method of driving it, the kind of vibration mode, the number of steps, etc. are not limited to those in the foregoing examples.

The present invention can be used for meters that indicate a voltage or the like, timepieces that indicate time, parts feeders for moving parts, etc.

**Claims**

1. An indicating device which is characterized in that an indicating member that is in frictional contact with a panel that generates flexural vibration is moved in the plane direction by the vibrational displacement in the plane direction of said panel to thereby incidate a physical quantity.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

## INTERNATIONAL SEARCH REPORT

International Application No  PCT/JP91/01687

**I. CLASSIFICATION OF SUBJECT MATTER** (if several classification symbols apply, indicate all) ⁶

According to International Patent Classification (IPC) or to both National Classification and IPC

Int. Cl⁵  H02N2/00

**II. FIELDS SEARCHED**

| Minimum Documentation Searched ⁷ | |
|---|---|
| Classification System | Classification Symbols |
| IPC | H02N2/00 |

| Documentation Searched other than Minimum Documentation to the Extent that such Documents are Included in the Fields Searched ⁸ |
|---|
| Jitsuyo Shinan Koho          1926 - 1991 |
| Kokai Jitsuyo Shinan Koho    1971 - 1991 |

**III. DOCUMENTS CONSIDERED TO BE RELEVANT ⁹**

| Category * | Citation of Document, ¹¹ with indication, where appropriate, of the relevant passages ¹² | Relevant to Claim No. ¹³ |
|---|---|---|
| X | JP, A, 51-45289 (Matsushita Electric Ind. Co., Ltd.), April 17, 1976 (17. 04. 76), Figs. 1 to 7 and its explanation | |

\* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| January 27, 1992 (27. 01. 92) | February 18, 1992 (18. 02. 92) |
| International Searching Authority | Signature of Authorized Officer |
| Japanese Patent Office | |

Form PCT/ISA/210 (second sheet) (January 1985)